(19) Europäisches Patentamt

European Patent Office

Office européen des brevets

(11) **EP 1 358 225 B1**

(12) **EUROPÄISCHE PATENTSCHRIFT**

(45) Veröffentlichungstag und Bekanntmachung des Hinweises auf die Patenterteilung:
**15.06.2005 Patentblatt 2005/24**

(21) Anmeldenummer: **01984812.6**

(22) Anmeldetag: **10.12.2001**

(51) Int Cl.⁷: **C08F 6/22**, C08C 1/15

(86) Internationale Anmeldenummer:
**PCT/EP2001/014444**

(87) Internationale Veröffentlichungsnummer:
**WO 2002/050168 (27.06.2002 Gazette 2002/26)**

(54) **VERFAHREN ZUR AUFARBEITUNG VON EMULSIONSPOLYMERISATEN**

METHOD FOR TREATING EMULSION POLYMERS

PROCEDE POUR LE TRAITEMENT DE POLYMERISATS PAR EMULSION

(84) Benannte Vertragsstaaten:
**BE DE ES IT NL**

(30) Priorität: **20.12.2000 DE 10063954**

(43) Veröffentlichungstag der Anmeldung:
**05.11.2003 Patentblatt 2003/45**

(73) Patentinhaber: **Bayer Aktiengesellschaft**
**51368 Leverkusen (DE)**

(72) Erfinder:
• **EICHENAUER, Herbert**
**41539 Dormagen (DE)**

• **MOSS, Stefan**
**42781 Haan (DE)**

(74) Vertreter: **Feldhues, Michael L.F., Dr.**
**Bayer Aktiengesellschaft,**
**Konzernbereich RP,**
**Patente und Lizenzen**
**51368 Leverkusen (DE)**

(56) Entgegenhaltungen:
**EP-A- 0 282 979      US-A- 4 602 083**
**US-A- 5 028 349**

**Beschreibung**

Gegenstand der Erfindung ist ein Verfahren zur Aufarbeitung von durch Emulsionspolymerisation hergestellten Polymerkomponenten, wobei die Aufarbeitung der entsprechenden Latices unter Verwendung eines speziellen Salzgemisches erfolgt.

Die Überführung wässriger Polymerisatlatices in Polymerformmassen erfolgt üblicherweise so, dass die Koagulation der Latexteilchen durch Zugabe wässriger Salzlösungen und/oder verdünnter Säuren ausgelöst wird.

Beispiele für Salze sind Natriumchlorid, Natriumsulfat, Magnesiumsulfat, Calciumchlorid, Aluminiumsulfat, Beispiele für Säuren sind Schwefelsäure, Phosphorsäure, Essigsäure (vgl. z.B. US-A 2 366 460, US-A S 3 108 983, US-A 3 248 455, DE-A 1 958 498).

Ein Nachteil dieser zur Koagulation bekannterweise eingesetzten Elektrolyte ist, dass sie keinen positiven Einfluss auf die Eigenfarbe der Polymerformmassen ausüben bzw. eher zu einer Verschlechterung der Polymerfarbe führen.

Es wurde nun gefunden, dass unter Beibehaltung der üblichen Koagulationshilfsmittel Formmassen mit deutlich verbesserter Eigenfarbe erhalten werden, wenn zusätzlich eine spezielle weitere wasserlösliche Salzkomponente im Koagulationsschritt eingesetzt wird.

Gegenstand der Erfindung ist somit ein Verfahren zur Aufarbeitung von durch Emulsionspolymerisation hergestellten Polymerkomponenten, dadurch gekennzeichnet, dass die Koagulation des nach der Emulsionspolymerisation vorliegenden wässrigen Polymerlatex unter Verwendung einer Kombination aus

A) mindestens einer wässrigen Lösung eines Salzes ausgewählt aus Natriumchlorid, Calciumchlorid, Magnesiumchlorid, Aluminiumchlorid, Natriumsulfat, Magnesiumsulfat, Aluminiumsulfat oder Mischungen hieraus,

B) mindestens einer wässrigen Lösung eines Salzes der hypophosphorigen Säure ($H_3PO_2$), der phosphorigen Säure ($H_3PO_3$ bzw. $HPO_2$) oder der Ascorbinsäure oder Mischungen hieraus und gegebenenfalls

C) einer wässrig verdünnten Säure ausgewählt aus Schwefelsäure, Phosphorsäure oder Essigsäure erfolgt.

Gegenüber den bisher bekannten thermoplastisch verarbeitbaren Formmassen enthaltend durch Emulsionspolymerisation hergestellte Polymerkomponenten unterscheiden sich die Formmassen enthaltend durch das erfindungsgemäße Verfahren aufgearbeitete Polymerkomponenten dadurch, dass sie eine deutlich verbesserte Eigenfarbe aufweisen, ohne dass die sonstigen Eigenschaften negativ beeinflusst werden. Diese Formmassen sind ebenfalls Gegenstand der Erfindung.

In der erfindungsgemäßen Fällmittelkombination werden die Einzelkomponenten in Mengen von 0,1 bis 5 Gew.-%, vorzugsweise 0,2 bis 4 Gew.-% und besonders bevorzugt 0,5 bis 2 Gew.-% A), 0,01 bis 2 Gew.-%, vorzugsweise 0,02 bis 1,5 Gew.-% und besonders bevorzugt 0,05 bis 1 Gew.-% B) und 0 bis 5 Gew.-%, vorzugsweise 0 bis 4 Gew.-% und besonders bevorzugt 0 bis 2,5 Gew.-% C) (jeweils bezogen auf den Latexfeststoff) eingesetzt.

Gemäß der Erfindung geeignete Komponenten A) sind Natriumchlorid, Calciumchlorid, Magnesiumchlorid, Aluminiumchlorid, Natriumsulfat, Magnesiumsulfat, Aluminiumsulfat in Form ihrer wässrigen Lösungen, vorzugsweise Natriumchlorid, Calciumchlorid, Magnesiumsulfat und Aluminiumsulfat in Form ihrer wässrigen Lösungen.

Prinzipiell können auch Mischungen aus diesen Salzkomponenten zur Herstellung wässriger Lösungen verwendet werden, z.B. Mischungen aus Magnesiumsulfat und Aluminiumsulfat.

Bevorzugte Komponente A) ist Magnesiumsulfat.

Dabei kann die Konzentration der Salze in der wässrigen Lösung in weiten Bereichen variiert werden; erfindungsgemäß besonders geeignet sind Konzentrationen von 0,1 bis 10 Gew.-%, insbesondere von 0,5 bis 5 Gew.-%.

Erfindungsgemäß geeignete Komponenten B) sind Salze der hypophosphorigen Säure ($H_3PO_2$) oder der phosphorigen Säure ($H_3PO_3$ bzw. $HPO_2$) oder der Ascorbinsäure in Form ihrer wässrigen Lösungen.

Besonders geeignete Salze sind Natriumhypophosphit, Kaliumhypophosphit, Magnesiumhypophosphit, Calciumhypophosphit, Natriumphosphit, Kaliumphosphit, Calciumphosphit, Natriumascorbat, Kaliumascorbat, Calciumascorbat.

Prinzipiell können auch hier Mischungen aus diesen Salzkomponenten zur Herstellung wässriger Lösungen verwendet werden, z.B. Mischungen aus Natriumhypophosphit und Natriumphosphit oder aus Natriumhypophosphit und Natriumascorbat.

Bevorzugte Komponente B) ist Natriumhypophosphit und / oder Natriumphosphit und/oder Natriumascorbat, besonders bevorzugt ist Natriumhypophosphit.

Auch bei der Komponente B) kann die Konzentration in der wässrigen Lösung in weiten Bereichen variiert werden, besonders geeignet sind hierbei Konzentrationen von 0,2 bis 5 Gew.-%, insbesondere von 0,5 bis 3 Gew.-%.

Als gegebenenfalls zusätzlich zu A) und B) verwendbare Säurekomponenten können im Prinzip alle in Form wässriger Säure vorliegenden Verbindungen verwendet werden. In der Praxis haben sich hierbei wässrige Schwefelsäure, wässrige Phosphorsäure und wässrige Essigsäure bewährt.

Besonders bevorzugt sind wässrige Schwefelsäure und wässrige Essigsäure, ganz besonders bevorzugt ist wässrige Essigsäure.

Die Anwendung der Kombination aus A) und B) und gegebenenfalls C) zur Herstellung der erfindungsgemäßen elastisch - thermoplastischen und thermoplastischen Formmassen kann auf vielfältige Weise erfolgen.

So kann z.B. eine wässrige Lösung, in der die Komponenten A) und B) und gegebenenfalls C) zusammen vorliegen, eingesetzt werden, es können jedoch auch separate Lösungen der einzelnen Komponenten in beliebiger Reihenfolge zur Koagulation verwendet werden.

Dabei kann so vorgegangen werden, dass die Komponenten A), B) und gegebenenfalls C) dem zu koagulierenden Latex zugesetzt werden oder aber der Latex zu den Komponenten A), B) und gegebenenfalls C) gegeben wird.

Als besonders vorteilhaft haben sich folgende Verfahrensweisen erwiesen:

1.) Zugabe eines Teils oder der gesamten Menge der wässrigen Lösung der Komponente B) zum zu koagulierenden Latex, Verteilung im Latex und anschließende Kontaktierung des resultierenden Gemisches mit der gesamten Menge der wässrigen Lösung der Komponente A und gegebenenfalls dem Rest der Komponente B) oder

2.) Zugabe der gesamten Menge der wässrigen Lösung der Komponente A) zum zu koagulierenden Latex bzw. Zugabe des zu koagulierenden Latex zur gesamten Menge der wässrigen Lösung der Komponente A) und anschließende Kontaktierung des resultierenden Gemisches mit der gesamten Menge der wässrigen Lösung der Komponente B).

Hierbei kann die gegebenenfalls zusätzlich einzusetzende Komponente C) zu beliebigen Zeitpunkten zugefügt werden, vorzugsweise wird sie zusammen mit der Komponente A) eingesetzt.

Die Koagulation der in Emulsionsform vorliegenden Polymerisate unter Verwendung der erfindungsgemäßen Kombination aus A), B) und gegebenenfalls C) kann bei beliebigen Temperaturen durchgeführt werden.

In der Praxis liegen diese Temperaturen in der Regel zwischen 40°C und 140°C, vorzugsweise zwischen 60°C und 100°C; die Isolierung der resultierenden Polymerkomponente aus der wässrigen Aufschlämmung kann durch übliche Trennverfahren wie beispielsweise Filtration oder Abzentrifugieren erfolgen.

An diese Isolierung schließt sich üblicherweise ein Trockenschritt nach bekannten Verfahren an.

Das Einsatzgewichtsverhältnis der Komponenten A : B beträgt 20 : 1 bis 1 : 1, vorzugsweise 10 : 1 bis 2 : 1 und besonders bevorzugt 5 : 1 bis 3 : 1. Im Falle eines zusätzlichen Einsatzes der Komponente C) wird diese in solchen Mengen eingesetzt, dass der pH - Wert der Polymeraufschlämmung nach dem Koagulationsschritt 3 bis 8, vorzugsweise 4 bis 7 und besonders bevorzugt 4 bis 6 beträgt.

Erfindungsgemäß können alle als wässrige Emulsion vorliegenden elastisch - thermoplastischen und thermoplastischen Polymerisate bzw. deren thermoplastisch verarbeitbare Gemische mit elastischen Polymerisaten gefällt werden, wenn bei deren Herstellung ≤ 5 Gew.-Teile (bezogen auf 100 Gew.-Teile Latexfeststoff) eines anionischen Emulgators eingesetzt wurden. Bevorzugt sind solche Latices, die unter Verwendung von ≤ 2 Gew.-Teilen Emulgator hergestellt wurden. Beispiele für solche Emulgatoren sind Natrium-, Kalium- oder Ammoniumsalze langkettiger Fettsäuren mit 10 bis 20 C-Atomen , z.B. Kaliumoleat, Alkalisalze von Dicarbonsäuren auf Basis cyclischer Kohlenwasserstoffgerüste (vgl. DE-A 36 39 904), Salze der disproportionierten Abietinsäure, Salze langkettiger Benzolsulfonate, z.B. Na-n-Dodecylbenzolsulfonat und Salze von langkettigen Sulfonsäuren, z.B. die Natriumsalze von $C_9$ - $C_{18}$- Alkylsulfonsäure-Gemischen.

Als Initiatoren können bei der Herstellung der wässrigen Polymerisatemulsionen alle bei der Emulsionspolymersation üblicherweise als Radikalbildner eingesetzten Verbindungen verwendet werden; Beispiele sind Kaliumperoxodisulfat, Ammoniumperoxodisulfat, Azobisisobutyronitril und Redoxinitiatorsysteme.

Beispiele für koagulierbare Latices sind Polymethylmethacrylat, Polyvinylchlorid, Polystyrol, Co- und Terpolymerisate des gegebenenfalls kern- oder seitenkettensubstituierten Styrols mit anderen harzbildenden Monomeren wie (Meth) Acrylnitril, (Meth) Acrylsäuremethylester, α- Methylstyrol, p-Methylstyrol, Vinyltoluol, sowie anderen kern- oder seitenkettensubstituierten Styrolen, N-(Cyclo)-Alkylmaleinimide, N-(Alkyl)-Phenylmaleinimiden, z.B. Styrol/Acrylnitril-Copolymerisate, Styrol/Methylmethacrylat-Copolymerisate oder α-Methylstyrol/Acrylnitril-Copolymerisate sowie die durch Polymerisation von harzbildenden ungesättigten Verbindungen in Gegenwart einer kautschukelastischen Komponente, beispielsweise Polybutadien, Polyisopren oder Acrylatkautschuk hergestellten elastisch-thermoplastischen Polymerisate sowie Mischungen der obengenannten Thermoplastharzlatices bzw. der Latices elastisch-thermoplastischer Polymerisate mit kautschukelastischen Latices wie z.B. Polybutadien, Polyisopren, Poly-n-butylacrylat, Butadien-Styrol-Copolymerisate, Butadien-Acrylnitril-Copolymerisate bzw. Mischungen aus Thermoplastharzlatex, dem Latex eines elastisch-thermoplastischen Polymerisats und einem kautschukelastischen Latex.

Bevorzugt sind dabei solche Latices, die erhalten werden, indem man den Latex einer kautschukelastischen Komponente, beispielsweise Polybutadien oder Copolymerisate von Butadien mit Acrylnitril und/oder Styrol mit dem Latex einer harten und spröden Komponente, beispielsweise einem Styrol- oder $\alpha$-Methylstyrol- oder p-Methylstyrol-Acrylnitril-Copolymerisat, und gegebenenfalls dem Latex eines elastischthermoplastischen Polymeren, z.B. dem Pfropfprodukt eines harzbildenden Monomeren, wie z.B. Styrol, $\alpha$-Methylstyrol, p-Methylstyrol, (Meth)-Acrylnitril oder (Meth)Acrylsäuremethylester bzw. deren Gemische auf Polybutadien, mischt und die Latexmischung dann unter Verwendung der oben beschriebenen Fällmittelkombination erfindungsgemäß koaguliert.

Ganz besonders bevorzugt sind Latices von elastisch-thermoplastischen Pfropfkautschuken, die erhalten wurden durch Emulsionspolymerisation von Monomeren (vorzugsweise Styrol, $\alpha$-Methylstyrol, Acrylnitril, Methylmethacrylat, N-Phenylmaleinimid oder Mischungen daraus) in Gegenwart von mindestens einem Elastomerlatex (vorzugsweise Polybutadien oder Copolymerisate des Butadiens mit Styrol oder Acrylnitril), hierbei sind besonders hervorzuheben die Pfropfkautschuklatices vom ABS-Typ wie sie beispielsweise erhalten werden durch Polymerisation von 10 - 95 Gew.-%, vorzugsweise 20 - 70 Gew.-% und besonders bevorzugt 30 - 60 Gew.-% eines Gemisches aus Styrol und Acrylnitril (Gew.-Verhältnis Styrol : Acrylnitril = 90 : 10 bis 50 : 50) in Gegenwart von 90 bis 5 Gew.-%, vorzugsweise 80 bis 30 Gew.-% und besonders bevorzugt 70 bis 40 Gew.-% eines Butadienpolymeren, das bis zu 15 Gew.-% eines Comonomeren aus Styrol und Acrylnitril einpolymerisiert enthalten kann.

Durch Abmischung der erfindungsgemäß speziell aufgearbeiteten Produkte mit weiteren nicht durch Emulsionspolymerisation hergestellten Polymerisaten, vorzugsweise kautschukfreien Harzen werden Formmassen mit deutlich verbesserter Eigenfarbe erhalten, ohne dass die sonstigen Eigenschaften negativ beeinflusst werden. Diese Formmassen sind ebenfalls Gegenstand der vorliegenden Erfindung.

Geeignete kautschukfreie Harze basieren z.B. auf Copolymerisaten des Styrols und Acrylnitrils im Gewichtsverhältnis 90 : 10 bis 50 : 50, wobei das Styrol ganz oder teilweise durch $\alpha$-Methylstyrol oder Methylmethacrylat ersetzt werden kann und wobei gegebenenfalls anteilmäßig bis zu 25 Gew.-%, bezogen auf Matrixharz, ein weiteres Monomeres aus der Reihe Maleinsäureanhydrid, Malein- oder Fumarsäurebisalkylester, Maleinsäureimid, N-(Cyclo)-alkylmaleinimid, N-(Alkyl)-phenylmaleinimid, Inden mitverwendet werden kann.

Einzelheiten zur Herstellung dieser Harze sind beispielsweise in der DE-A 2 420 358, der DE-A 2 724 360 und der EP-A 255 889 beschrieben. Durch Masse- oder Lösungspolymerisation hergestellte Matrixharze haben sich besonders bewährt.

Als Mischvorrichtungen für die Vermischung der Fällprodukte mit den Harzen kommen beispielsweise Mehrwatzenstühle, Mischextruder oder Innenkneter in Betracht.

Den Formmassen der Erfindung können bei der Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Flammschutzmittel, Füll- oder Verstärkerstoffe (Glasfasern, Kohlefasern, etc.) und Farbmittel.

Die Endverformung kann auf handelsüblichen Verarbeitungsaggregaten vorgenommen werden und umfasst z.B. Spritzgußverarbeitung, Plattenextrusion mit gegebenenfalls anschließender Warmverformung, Kaltverformung, Extrusion von Rohren und Profilen oder Kalander-Verarbeitung.

Weiterhin können die erfindungsgemäßen Formmassen als Modifikatoren zur Erhöhung der Zähigkeit einzelner oder aus verschiedenen Materialien abgemischter thermoplastischer Formmassen dienen. Beispiele für modifizierbare Formmassen sind:

a) Weitere Homo- und Mischpolymerisate von Styrol und alkylsubstituiertem Styrol mit vinylgruppenhaltigen Monomeren, z.B. Polystyrol, Poly(p-methyl)styrol, Poly(styrol-co-maleinsäureanhydrid), Poly(styrol-co-acrylnitril-co-maleinsäure-N-phenylimid), Poly(styrol-co-maleinsäure-N-phenylimid),

b) Homo- und Mischpolymerisate von $C_1$-$C_4$-Alkyl(meth)acrylaten mit vinylgruppenhaltigen Monomeren, z.B. Polymethylmethacrylat, Poly(methylmethacrylat-co-styrol), Poly(methylmeihacrylat-co-maleinsäureanhydrid), Poly(methylmethacrylat-co-styrol-co-maleinsäureanhydrid),

c) halogenhaltige Polymerisate, z.B. Polyvinylchlorid, Polyvinylidenchlorid, chloriertes Polyethylen,

d) Polycarbonate, z.B. auf Basis von Bisphenol A, 1,1-Bis-(4-hydroxyphenyl)-3,3,5-trimethylcyclohexan, Tetramethylbisphenol A, Tetrabrombisphenol A,

e) Polyester, z.B. auf Basis Terephthalsäure, Isophthalsäure, Ethylenglykol, Butandiol,

f) Polyamide, z.B. auf Basis $\varepsilon$-Caprolactam, Laurinlactam, Adipinsäure/Hexamethylendiamin.

Dabei werden die erfindungsgemäß hergestellten Formmassen in Mengen von 1 bis 80, vorzugsweise 5 bis 50 Gew.-%, bezogen auf die gesamte durch Abmischung erhaltene Formmasse, eingesetzt.

In den folgenden Beispielen sind Teile immer Gewichtsteile und % immer Gew.-%, wenn nicht anders angegeben.

## Beispiele

### Herstellung eines elastisch - thermoplastischen Pfropfkautschuklatex

58 Gew.-Teile (gerechnet als Feststoff) eines Polybutadienlatexgemisches (50 Gew.-% mit einem mittleren Teilchendurchmesser $d_{50}$ von 398 nm und einem Gelgehalt von 83 Gew.-% und 50 Gew.-% mit einem mittleren Teilchendurchmesser $d_{50}$ von 282 nm und einem Gelgehalt von 58 Gew.-%, beide hergestellt durch radikalische Polymerisation) werden mit Wasser auf einen Feststoffgehalt von ca. 20 Gew.-% gebracht. Danach wird auf 63°C erwärmt und mit 0,5 Gew.-Teilen $K_2S_2O_8$ (gelöst in Wasser) versetzt. Dann werden innerhalb von 4 Stunden parallel 42 Gew.-Teile eines Monomerengemisches (Gew.-Verhältnis Styrol : Acrylnitril = 73 : 27), 0,15 Gew.-Teile tert.-Dodecylmercaptan und 1,0 Gew.-Teile (gerechnet als Festsubstanz) des Natriumsalzes eines Harzsäuregemisches (Dresinate 731, Abieta Chemie GmbH, Gersthofen), gelöst in alkalisch eingestelltem Wasser, zudosiert.

Die Reaktionstemperatur wird während der Reaktionszeit im Bereich von 63-65°C gehalten. Nach Zugabe von ca. 1 Gew.-Teil eines phenolischen Antioxidans wird der Latex wie in den Beispielen beschrieben koaguliert.

### Beispiel 1

5,2 kg des oben beschriebenen Latex werden unter Rühren in eine 30°C warme Lösung von 200g Bittersalz ($MgSO_4$ x 7 $H_2O$) und 30 g Natriumhypophosphit in 10 l entsalztem Wasser gegeben, wonach auf 95 bis 98°C erwärmt und bis zur Aushärtung der Polymerisatkörner gerührt wird. Das Polymerisatpulver wird durch Filtration des heißen Fällgemisches von der wässrigen Phase getrennt und nach Waschen mit Wasser bei 70°C getrocknet.

### Beispiel 2

Beispiel 1 wird wiederholt, wobei als Fälllösung eine Lösung von 200 g Bittersalz und 30 g Natriumascorbat in 10 l entsalztem Wasser verwendet wird.

### Beispiel 3

Beispiel 1 wird wiederholt, wobei als Fälllösung eine Lösung von 200 g Bittersalz, 20 g Natriumhypophosphit und 20 g Natriumascorbat in 10 l entsalztem Wasser verwendet wird.

### Beispiel 4 (Vergleich)

Beispiel 1 wird wiederholt, wobei als Fälllösung eine Lösung von 200 g Bittersalz in 10 l entsalztem Wasser verwendet wird.

### Beispiel 5

Beispiel 1 wird wiederholt, wobei als Fälllösung eine Lösung von 200 g Bittersalz, 30 g Natriumhypophosphit und 100 ml Essigsäure in 10 l entsalztem Wasser verwendet wird.

### Beispiel 6 (Vergleich)

Beispiel 1 wird wiederholt, wobei als Fälllösung eine Lösung von 200 g Bittersalz und 100 ml Essigsäure in 10 l entsalztem Wasser verwendet wird.

### Herstellung thermoplastischer Formmassen unter Verwendung der gemäß Beispielen 1 bis 6 erhaltenen Pfropfkautschukpolymerpulver

40 Gew.-Teile Pfropfkautschukpolymerpulver, 60 Gew.-Teile eines Styrol/Acrylnitril-(SAN)-Copolymerharzes (Gew.-Verhältnis 72 : 28, $\overline{M}_w$ = 115 000, ermittelt durch Gelpermeationschromatographie), 2 Gew.-Teile Ethylendiaminbisstearylamid und 0,1 Gew.-Teile eines Silikonöls werden in einem Innenkneter vom Banbury- Typ bei ca. 190-200°C vermischt und anschließend bei 240°C durch Spritzgießen zu Prüfkörpern verarbeitet.

Folgende Daten werden ermittelt:

Kerbschlagzähigkeit bei Raumtemperatur ($a_k^{RT}$) nach ISO 180/1A (Einheit : kJ/m$^2$), Kugeldruckhärte $H_c$ nach DIN 53 456 (Einheit: N/mm$^2$),

MVR nach DIN 53 735 U (Einheit: cm$^3$/10 min).

Die Farbstabilität bei der Verarbeitung wird durch Messung des Yellowness-Index (YI) gemäß ASTM-Norm D 1925 (Lichtart: C, Beobachter: 2°, Messöffnung: Large Area Value) nach der Gleichung

$$YI = (128X-106Z)/Y,$$

mit X,Y,Z = Farbkoordinaten gemäß DIN 5033 an den nach dem Spritzgießvorgang vorliegenden Teilen ermittelt.

Die geprüften Zusammensetzungen sowie die erhaltenen Prüfwerte sind in Tabelle 1 zusammengestellt. Daraus ist ersichtlich, dass die Formmassen, die eine durch das erfindungsgemäße Verfahren erhaltene Komponente enthalten, deutlich verbesserte Yellowness-Index-Werte ohne negative Beeinflussung der sonstigen Eigenschaften aufweisen.

**Tabelle 1**: Zusammensetzungen und Prüfwerte der untersuchten Zusammensetzungen

Beispiel Pfropfkautschukpolymerpulver aus

| Beispiel | Bsp. 1 [Gew.-Teile] | Bsp. 2 [Gew.-Teile] | Bsp. 3 [Gew.-Teile] | Bsp. 4 [Gew.-Teile] | Bsp. 5 [Gew.-Teile] | Bsp. 6 [Gew.-Teile] | SAN-Harz [Gew.-Teile] | $a_k^{RT}$ [kJ/m²] | Härte $H_c$ [N/mm²] | MVR [cm³/10min] | YI [kJ/m²] |
|---|---|---|---|---|---|---|---|---|---|---|---|
| 1 | 40 | -- | -- | -- | -- | -- | 60 | 34 | 83 | 7.7 | 24 |
| 2 | -- | 40 | -- | -- | -- | -- | 60 | 33 | 83 | 8.2 | 25 |
| 3 | -- | -- | 40 | -- | -- | -- | 60 | 33 | 85 | 8.4 | 24 |
| 4 (Vergleich) | -- | -- | -- | 40 | -- | -- | 60 | 34 | 82 | 7.6 | 30 |
| 5 | -- | -- | -- | -- | 40 | -- | 60 | 34 | 83 | 8.4 | 28 |
| 6 (Vergleich) | -- | -- | -- | -- | -- | 40 | 60 | 33 | 83 | 8.7 | 34 |

Additive : 2 Gew.-Teile Ethylendiaminbisstearylamid, 0.1 Gew.-Teile Silikonöl

EP 1 358 225 B1

**Patentansprüche**

1. Verfahren zur Aufarbeitung von durch Emulsionspolymerisation hergestellten Polymerkomponenten, **dadurch gekennzeichnet, dass** die Koagulation des nach der Emulsionspolymerisation vorliegenden wässrigen Polymerlatex unter Verwendung einer Kombination aus

   A) mindestens einer wässrigen Lösung eines Salzes ausgewählt aus Natriumchlorid, Calciumchlorid, Magnesiumchlorid, Aluminiumchlorid, Natriumsulfat, Magnesiumsulfat, Aluminiumsulfat oder Mischungen hieraus,

   B) mindestens einer wässrigen Lösung eines Salzes der hypophosphorigen Säure ($H_3PO_2$), der phosphorigen Säure ($H_3PO_3$ bzw. $HPO_2$), der Ascorbinsäure oder Mischungen hieraus und gegebenenfalls

   C) einer wässrig verdünnten Säure ausgewählt aus Schwefelsäure, Phosphorsäure oder Essigsäure

   erfolgt.

2. Verfahren gemäß Anspruch 1, wobei Magnesiumsulfat als Komponente A verwendet wird.

3. Verfahren gemäß Anspruch 1, wobei Natriumhypophosphit als Komponente B verwendet wird.

4. Verfahren gemäß Anspruch 1, wobei Essigsäure als Komponente C verwendet wird.

5. Verfahren gemäß Ansprüchen 1 bis 4, wobei eine Kombination aus Magnesiumsulfat und Natriumhypophosphit im Koagulationsschritt verwendet wird.

6. Verfahren gemäß Ansprüchen 1 bis 4, wobei eine Kombination aus Magnesiumsulfat, Natriumhypophosphit und Essigsäure im Koagulationsschritt verwendet wird.

7. Verfahren gemäß Anspruch 1 bis 6, wobei 0,1 bis 5 Gew.-% (bezogen auf den Latexfeststoff) an Komponente A eingesetzt wird.

8. Verfahren gemäß Anspruch 1 bis 7, wobei 0,01 bis 2 Gew.-% (bezogen auf den Latex feststoff) an Komponente B eingesetzt wird.

9. Verfahren gemäß Anspruch 1 bis 8, erhalten durch Verwendung von 0 bis 5 Gew.-% (bezogen auf den Latexfeststoff) an Komponente C.

10. Polymerkomponente, erhältlich nach dem Verfahren gemäß Anspruch 1 bis 9.

11. Thermoplastische Formmassen enthaltend mindestens eine elastisch-thermoplastische Polymerkomponente erhalten nach einem oder mehreren der vorstehenden Ansprüche und mindestens eine nicht durch Emulsionspolymerisation hergestellte thermoplastische Harzkomponente.

12. Thermoplastische Formmassen gemäß Anspruch 10 enthaltend mindestens eine elastisch-thermoplastische Polymerkomponente vom ABS-Typ und mindestens eine durch Lösungspolymerisation hergestellte thermoplastische Vinylharzkomponente.

13. Thermoplastische Formmassen gemäß Ansprüchen 10 und 11 enthaltend mindestens eine durch Polykondensation hergestellte thermoplastische Harzkomponente.


**Claims**

1. Process for working up polymer components prepared by emulsion polymerization, **characterized in that** the aqueous polymer latex present after the emulsion polymerization is coagulated using a combination of

   A) at least one aqueous solution of a salt selected from sodium chloride, calcium chloride, magnesium chloride, aluminium chloride, sodium sulphate, magnesium sulphate, aluminium sulphate or mixtures thereof,

B) at least one aqueous solution of a salt of hypophosphorous acid ($H_3PO_2$), phosphorous acid ($H_3PO_3$ or $HPO_2$), ascorbic acid or mixtures thereof and optionally

C) an aqueously dilute acid selected from sulphuric acid, phosphoric acid and acetic acid.

2. Process according to Claim 1, wherein magnesium sulphate is used as component A.

3. Process according to Claim 1, wherein sodium hypophosphite is used as component B.

4. Process according to Claim 1, wherein acetic acid is used as component C.

5. Process according to Claims 1 to 4, wherein a combination of magnesium sulphate and sodium hypophosphite is used in the coagulation step.

6. Process according to Claims 1 to 4, wherein a combination of magnesium sulphate, sodium hypophosphite and acetic acid is used in the coagulation step.

7. Process according to Claim 1 to 6, wherein 0.1 to 5% by weight (based on the latex solids) of component A is used.

8. Process according to Claim 1 to 7, wherein 0.01 to 2% by weight (based on the latex solids) of component B is used.

9. Process according to Claim 1 to 8, obtained by using from 0 to 5% by weight (based on the latex solids) of component C.

10. Polymer component, obtainable by the process according to Claim 1 to 9.

11. Thermoplastic moulding compositions comprising at least one elastic-thermoplastic polymer component obtained according to one or more of the above claims and at least one thermoplastic resin component not prepared by emulsion polymerization.

12. Thermoplastic moulding compositions according to Claim 10, comprising at least one elastic-thermoplastic polymer component of the ABS type and at least one thermoplastic vinyl resin component prepared by solution polymerization.

13. Thermoplastic moulding compositions according to Claims 10 and 11, comprising at least one thermoplastic resin component prepared by polycondensation.


**Revendications**

1. Procédé pour le traitement de composants polymères produits par polymérisation en émulsion, **caractérisé en ce que** la coagulation du latex de polymère aqueux existant après la polymérisation en émulsion a lieu avec utilisation d'une combinaison constituée de :

A) au moins une solution aqueuse d'un sel choisi parmi le chlorure de sodium, le chlorure de calcium, le chlorure de magnésium, le chlorure d'aluminium, le sulfate de sodium, le sulfate de magnésium, le sulfate d'aluminium, ou des mélanges de ces derniers,

B) au moins un solution aqueuse d'un sel de l'acide hypophosphoreux ($H_3PO_2$), de l'acide phosphoreux ($H_3PO_3$ ou $HPO_2$), de l'acide ascorbique ou des mélanges de ces derniers et, le cas échéant,

C) un acide dilué aqueux choisi parmi l'acide sulfurique, l'acide phosphorique ou l'acide acétique.

2. Procédé selon la revendication 1, avec utilisation de sulfate de magnésium comme composant A.

3. Procédé selon la revendication 1, avec utilisation d'hypophosphite de sodium comme composant B.

4. Procédé selon la revendication 1 avec utilisation d'acide acétique comme composant C.

**5.** Procédé selon les revendications 1 à 4 avec utilisation d'une combinaison de sulfate de magnésium et d'hypophosphite de sodium dans l'étape de coagulation.

**6.** Procédé selon les revendications 1 à 4, avec utilisation d'une combinaison de sulfate de magnésium, d'hypophosphite de sodium et d'acide acétique dans l'étape de coagulation.

**7.** Procédé selon les revendications 1 à 6, avec utilisation de 0,1 à 5% en poids (rapporté à la matière solide du latex) de composant A.

**8.** Procédé selon les revendications 1 à 7 avec utilisation de 0,01 à 2% en poids (rapporté à la matière solide du latex) de composant B.

**9.** Procédé selon les revendications 1 à 8, obtenu par utilisation de 0 à 5% en poids (rapporté à la matière solide du latex) de composant C.

**10.** Composant polymère pouvant être obtenu par le procédé selon les revendications 1 à 9.

**11.** Matières à mouler thermoplastiques contenant au moins un composant polymère élasto-thermoplastique obtenu selon une ou plusieurs des revendications précédentes et au moins un composant résine thermoplastique non produit par polymérisation en émulsion.

**12.** Matières à mouler thermoplastiques selon la revendication 10, contenant au moins un composant polymère élasto-thermoplastique du type ABS et au moins un composant résine vinylique thermoplastique produit par polymérisation en solution.

**13.** Matières à mouler thermoplastiques selon les revendications 10 et 11 contenant au moins un composant résine thermoplastique produit par polycondensation.